# EUROPEAN PATENT APPLICATION

(11) **EP 4 683 145 A1**
(43) Date of publication of application: **21.01.2026**
(21) Application number: 24933769.2
(22) Date of filing: 23.10.2024
(51) Int. Cl.: H02G 15/013

(54) **SUBMARINE CABLE JOINT BOX**

(30) Priority: 03.04.2024 CN 202420689308 U
(71) Applicant: Zhongtian Technology Marine Systems Co., Ltd., Nantong, Jiangsu 226010 (CN); Jiangsu Zhongtian Technology Co., Ltd., Nantong, Jiangsu 226000 (CN)
(72) Inventor: LU, Qi, Nantong, Jiangsu 226010 (CN); FENG, Yawen, Nantong, Jiangsu 226010 (CN); XIE, Shuhong, Nantong, Jiangsu 226010 (CN); GUO, Chaoyang, Nantong, Jiangsu 226010 (CN); ZHANG, Zhifeng, Nantong, Jiangsu 226010 (CN); ZHANG, Suhao, Nantong, Jiangsu 226010 (CN); GE, Zhixiao, Nantong, Jiangsu 226010 (CN); DONG, Wulei, Nantong, Jiangsu 226010 (CN); LIU, Xiao, Nantong, Jiangsu 226010 (CN)
(74) Representative: J A Kemp LLP
(86) International application number: PCT/CN2024/126827
(87) International publication number: WO 2025/208843

(57) **Abstract**

The present utility model provides a submarine cable splicing box. The submarine cable splicing box provided by the present utility model includes a splicing box body, a reinforcement assembly and a sealing assembly. The reinforcement assembly is arranged on opposite sides of the splicing box body, and includes a fixing base, a first connecting sleeve and a second connecting sleeve; the fixing base is fixedly connected to one side of the splicing box body, the first connecting sleeve is connected to the fixing base, the fixing base has a first mounting hole, and the first connecting sleeve has a second mounting hole; the first mounting hole is communicated with the inside of the splicing box body, and the first mounting hole and the second mounting hole are communicated with each other and form a channel for the cable core of a submarine cable to penetrate into the splicing box body; the second connecting sleeve is sleeved outside the first connecting sleeve, and one end of the second connecting sleeve is connected to the fixing base, and a gap with adjustable width is formed between the first connecting sleeve and the second connecting sleeve. The present utility model provides a submarine cable splicing box, which can prevent the occurrence of continuous discharge of induced current and protect an optical unit.

## Description

The present application claims priority to Chinese Patent Application No. 202420689308.0, filed with the China National Intellectual Property Administration on April 3, 2024, and entitled "SUBMARINE CABLE SPLICING BOX", which is hereby incorporated by reference in its entirety.

### TECHNICAL FIELD

The utility model relates to the field of submarine cables, and in particular to a submarine cable splicing box.

### BACKGROUND

With the growth of global communication and energy demands, submarine optical cables have been widely used as an important medium for information and power transmission. The submarine cable splicing box is a key assembly in the submarine cable system, and used to connect and protect the junction part of the submarine cable.

The structure of an existing submarine cable splicing box usually includes an outer shell, a sealing structure, a splicing cavity, and a conductor connection part. Among them, the outer shell is used to protect internal components, the sealing structure can prevent seawater ingress, the splicing cavity is used for the installation and connection of submarine cable junctions, and the conductor connection part ensures the connection of conductors. These structures work together to enable the submarine cable splicing box to work stably in the marine environment and ensure reliable connection and transmission of the submarine cable system.

However, the existing submarine cable splicing box is prone to continuous discharge of induced current, which may cause the optical unit to malfunction.

### SUMMARY

In order to solve at least one of the problems mentioned in the background art, the present utility model provides a submarine cable splicing box, which can prevent the continuous discharge of induced current and protect an optical unit.

To achieve the above purposes, the present utility model provides the following technical solution.

The present utility model provides a submarine cable splicing box, including a splicing box body, a reinforcement assembly and a sealing assembly. The reinforcement assembly is arranged on two opposite sides of the splicing box body, and the reinforcement assembly includes a fixing base, a first connecting sleeve and a second connecting sleeve;
the fixing base is fixedly connected to one side of the splicing box body, the first connecting sleeve is connected to the fixing base, the fixing base has a first mounting hole, the first connecting sleeve has a second mounting hole, the first mounting hole is communicated with the inside of the splicing box body, the first mounting hole and the second mounting hole are communicated with each other, and the first mounting hole and the second mounting hole form a channel for the cable core of the submarine cable to penetrate into the splicing box body;
the second connecting sleeve is sleeved outside the first connecting sleeve, and one end of the second connecting sleeve is connected to the fixing base; a gap with adjustable width is formed between the first connecting sleeve and the second connecting sleeve so that an armored layer of the submarine cable is clamped through the gap;
the sealing assembly is arranged between the reinforcement assembly and the submarine cable, and the sealing assembly is configured to seal a gap between the reinforcement assembly and the submarine cable.

As an optional embodiment, the outer wall of the first connecting sleeve includes a first conical surface, the inner wall of the second connecting sleeve includes a second conical surface, and a gap is formed between the first conical surface and the second conical surface. The width of the gap changes with a change of relative positions of the first connecting sleeve and the second connecting sleeve along the axial direction of the second mounting hole.

As an optional embodiment, the diameters of the first conical surface and the second conical surface decrease in a direction away from the fixing base.

As an optional embodiment, the reinforcement assembly further includes a threaded connector connected between the second connecting sleeve and the fixing base, and the threaded connector is configured to adjust the relative positions of the first connecting sleeve and the second connecting sleeve along the axial direction of the second mounting hole.

As an optional embodiment, an end of the fixing base facing away from the splicing box body has a clamping groove, and one end of the first connecting sleeve is clamped into the clamping groove.

As an optional embodiment, the sealing assembly includes a first sealing member, which is configured to be arranged between the second connecting sleeve and the submarine cable, and the first sealing member is arranged at an end of the second connecting sleeve away from the fixing base.

As an optional embodiment, the outer wall of the first sealing member includes a third conical surface, the inner wall of the second connecting sleeve includes a fourth conical surface, and the diameters of the third conical surface and the fourth conical surface decrease in a direction approaching the fixing base, and the third conical surface and the fourth conical surface abut against each other to seal the gap between the second connecting sleeve and the submarine cable.

As an optional embodiment, the first sealing member is configured to extend from a side of the second connecting sleeve away from the fixing base, and the outer wall of the end of the second connecting sleeve away from the fixing base has an external thread. The reinforcement assembly further includes a fastening nut, which has a central hole for the submarine cable to pass through. The fastening nut is threadedly connected to the external thread of the second connecting sleeve, and abuts against the end of the first sealing member extending out of the second connecting sleeve.

As an optional embodiment, the sealing assembly further includes a second sealing member, which is configured to be arranged between the inner wall of the fixing base and the submarine cable.

As an optional embodiment, the reinforcement assembly further includes a clamping sleeve, which is configured to be sleeved outside of the submarine cable; and the clamping sleeve is arranged at the end of the fastening nut facing away from the second connecting sleeve. The clamping sleeve includes two arc-shaped clips; and the two clips are connected by bolts so as to make the two clips clamp the submarine cable by adjusting the bolts.

The submarine cable splicing box provided by the present utility model includes a splicing box body, a reinforcement assembly and a sealing assembly. The reinforcement assembly is arranged on two opposite sides of the splicing box body, and includes a fixing base, a first connecting sleeve and a second connecting sleeve; the fixing base is fixedly connected to one side of the splicing box body, and the first connecting sleeve is connected to the fixing base; the fixing base has a first mounting hole, the first connecting sleeve has a second mounting hole, the first mounting hole is communicated with the inside of the splicing box body, the first mounting hole and the second mounting hole are communicated with each other, and the first mounting hole and the second mounting hole form a channel for the cable core of the submarine cable to pass through the splicing box body; the second connecting sleeve is sleeved outside the first connecting sleeve, and one end of the second connecting sleeve is connected to the fixing base, and a gap with adjustable width is formed between the first connecting sleeve and the second connecting sleeve to clamp an armored layer of the submarine cable through the gap; the sealing assembly is arranged between the reinforcement assembly and the submarine cable, and the sealing assembly is configured to seal the gap between the reinforcement assembly and the submarine cable.

The submarine cable splicing box provided by the present utility model, by setting structures for clamping the armored metal layer of the submarine cable on both sides of the splicing box body, when splicing the submarine cable, allows the cable cores of the submarine cable on both sides of the splicing box to be respectively inserted into the interior of the splicing box along the second mounting hole and the first mounting hole for splicing. The armored metal layer of the submarine cable can be clamped in the gap formed by the first connecting sleeve and the second connecting sleeve, and the width of the gap is adjusted to clamp the armored metal layer, so that the electrical connection of the submarine cable on both sides of the splicing box can be achieved, and the induced current generated in the splicing box can be grounded, which avoids the induced current from accumulating in the splicing box and damaging an optical unit, thereby effectively protecting the optical unit. In addition, by reinforcing the connection of the armored metal layer of the submarine cable, the overall connection strength of the splice place of the submarine cable can also be improved, preventing the splice place from slipping off.

### BRIEF DESCRIPTION OF DRAWINGS

In order to more clearly illustrate the technical solutions of the embodiments of the present utility model or in the prior art, the following briefly introduces the drawings required for use in the description of the embodiments or the prior art. Obviously, the drawings described below are some embodiments of the present utility model. For persons skilled in the art, other drawings can also be obtained based on these drawings without paying any creative labor.
FIG. 1 is a schematic diagram of the overall structure of a submarine cable splicing box provided by an embodiment of the present utility model.
FIG. 2 is a partially enlarged schematic diagram of a submarine cable splicing box provided by an embodiment of the present utility model.

### Description of reference numerals:

100 - splicing box;
110 - splicing box body;
120 - reinforcement assembly;
121 - fixing base;
122 - first connecting sleeve;
123 - second connecting sleeve;
124 - gap;
125 - threaded connector;
126 - fastening nut;
127 - clamping sleeve;
130 - sealing assembly;
131 - first sealing member;
132 - second sealing member;
200 - submarine cable.

### DESCRIPTION OF EMBODIMENTS

The technical solutions in the embodiments of the present utility model will be clearly and completely described below in conjunction with the drawings in the embodiments of the present utility model. Obviously, the described embodiments are only part of the embodiments of the present utility model, rather than all the embodiments. Based on the embodiments of the present utility model, all other embodiments obtained by persons skilled in the art without making any creative work shall fall within the scope of protection of the present utility model.

In the application, the orientations or positional relationships indicated by terms such as "upper", "lower", "left", "right", "front", "back", "top", "bottom", "inside", "outside", "vertical", "horizontal", "transverse", and "longitudinal" are based on the orientations or positional relationships shown in the accompanying drawings. These terms are mainly intended to better describe the present utility model and its embodiments, and not intended to limit the indicated devices, elements or components to have a specific orientation, or to be constructed and operated in a specific orientation.

Moreover, some of the above terms may be used to express other meanings in addition to indicating orientations or positional relationships. For example, the term "upper" may also be used to indicate a certain dependency or connection relationship in certain circumstances. For persons skilled in the art, the specific meanings of these terms in the present utility model can be understood according to specific circumstances.

In addition, the terms "installation", "setting", "provided with", "connection", and "connected" should be understood in a broad sense. For example, it may be a fixed connection, a detachable connection, or an integral structure; it may be a mechanical connection or an electrical connection; it may be a direct connection or an indirect connection via an intermediate medium, or it may be an internal communication between two devices, elements or components. For persons skilled in the art, the specific meanings of the above terms in the present utility model can be understood according to specific circumstances.

In addition, the terms "first", "second", etc., are mainly intended to distinguish different devices, elements or components (the specific types and structures may be the same or different), and are not intended to indicate or imply the relative importance and quantity of the indicated devices, elements or components. Unless otherwise specified, "plurality" means two or more.

The structure of an existing submarine cable splicing box usually includes an outer shell, a sealing structure, a splicing cavity, a conductor connection part and so on. Among them, the outer shell is used to protect internal components, the sealing structure prevents seawater ingress, the splicing cavity is used for the installation and connection of submarine cable junctions, and the conductor connection part ensures the connection of conductors. These structures work together to enable the submarine cable splicing box to work stably in the marine environment and ensure reliable connection and transmission of the submarine cable system. However, the existing submarine cable splicing box is prone to continuous discharge of induced current, which may cause the optical unit to malfunction.

In view of this, the present utility model provides a submarine cable splicing box, including a splicing box body, a reinforcement assembly and a sealing assembly. The reinforcement assembly is arranged on two opposite sides of the splicing box body, and the reinforcement assembly includes a fixing base, a first connecting sleeve and a second connecting sleeve; the fixing base is fixedly connected to one side of the splicing box body, the first connecting sleeve is connected to the fixing base, the fixing base has a first mounting hole, the first connecting sleeve has a second mounting hole, the first mounting hole is communicated with the inside of the splicing box body, the first mounting hole and the second mounting hole are communicated with each other; the second connecting sleeve is sleeved outside the first connecting sleeve, and one end of the second connecting sleeve is connected to the fixing base, and a gap with adjustable width is formed between the first connecting sleeve and the second connecting sleeve to clamp an armored layer of the submarine cable through the gap. When splicing the submarine cable, the cable cores of the submarine cable on both sides of the splicing box can be respectively penetrated into the interior of the splicing box along the second mounting hole and the first mounting hole for splicing. The armored metal layer of the submarine cable can be clamped in the gap formed by the first connecting sleeve and the second connecting sleeve, and the armored metal layer can be clamped by adjusting the width of the gap, so that the electrical connection of the submarine cable on both sides of the splicing box can be achieved, and the induced current generated in the splicing box can be grounded, which avoids the induced current from accumulating in the splicing box and damaging an optical unit, thereby effectively protecting the optical unit. In addition, by reinforcing the connection of the armored metal layer of the submarine cable, the overall connection strength of the splice place of the submarine cable can also be improved, preventing the splice place from slipping off.

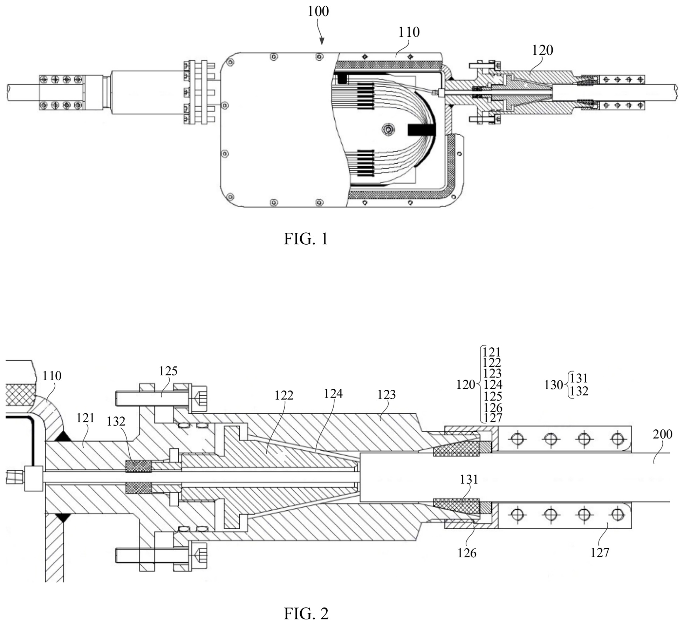

FIG. 1 is a schematic diagram of the overall structure of a submarine cable splicing box provided by an embodiment of the present utility model; FIG. 2 is a partially enlarged schematic diagram of a submarine cable splicing box provided by an embodiment of the present utility model.

With reference to FIGS. 1 and 2, an embodiment of the present utility model provides a submarine cable splicing box 100, including a splicing box body 110, a reinforcement assembly 120, and a sealing assembly 130. The reinforcement assembly 120 is arranged on opposite sides of the splicing box body 110. The reinforcement assembly 120 includes a fixing base 121, a first connecting sleeve 122, and a second connecting sleeve 123. The fixing base 121 is fixedly connected to one side of the splicing box body 110, and the first connecting sleeve 122 is connected to the fixing base 121. The fixing base 121 has a first mounting hole, and the first connecting sleeve 122 has a second mounting hole. The first mounting hole is communicated with the inside of the splicing box body 110. The first mounting hole and the second mounting hole are communicated with each other, and the first mounting hole and the second mounting hole form a channel for the cable core of the submarine cable 200 to penetrate into the splicing box body 110. The second connecting sleeve 123 is sleeved outside the first connecting sleeve 122, and one end of the second connecting sleeve 123 is connected to the fixing base 121. A gap 124 with adjustable width is formed between the first connecting sleeve 122 and the second connecting sleeve 123, thereby clamping an armored layer of the submarine cable 200 through the gap 124. The sealing assembly 130 is arranged between the reinforcement assembly 120 and the submarine cable 200, and the sealing assembly 130 is configured to seal the gap 124 between the reinforcement assembly 120 and the submarine cable 200.

It can be understood that the materials of the fixing base 121, the first connecting sleeve 122, and the second connecting sleeve 123 can all be conductive metal materials, thereby achieving grounding through the armored metal layer. Specifically, the materials of the fixing base 121, the first connecting sleeve 122, and the second connecting sleeve 123 can be stainless steel with the grade 316L.

The submarine cable splicing box 100 provided by the present utility model, by setting structures for clamping the armored metal layer of the submarine cable 200 on both sides of the splicing box body 110, when splicing the submarine cable 200, enables the cable cores of the submarine cable 200 on both sides of the splicing box 100 to be respectively penetrated into the interior of the splicing box 100 along the second mounting hole and the first mounting hole for splicing. The armored metal layer of the submarine cable 200 can be clamped in the gap 124 formed by the first connecting sleeve 122 and the second connecting sleeve 123, and the armored metal layer can be clamped by adjusting the width of the gap 124, so that the electrical connection of the submarine cable 200 on both sides of the splicing box 100 can be achieved, and the induced current generated in the splicing box 100 can be grounded, which prevents the induced current from accumulating in the splicing box 100 and thus damaging an optical unit, thereby effectively protecting the optical unit. In addition, by reinforcing the connection of the armored metal layer of the submarine cable 200, the overall connection strength of the splice place of the submarine cable 200 can also be improved, preventing the splice place from slipping off.

In the above embodiment, the outer wall of the first connecting sleeve 122 may include a first conical surface, the inner wall of the second connecting sleeve 123 includes a second conical surface, and a gap 124 is formed between the first conical surface and the second conical surface. The width of the gap 124 changes with the change of the relative position of the first connecting sleeve 122 and the second connecting sleeve 123 along the axial direction of the second mounting hole. It can be understood that when the armored metal layer needs to be placed in the gap 124 between the first conical surface and the second conical surface, the first connecting sleeve 122 and the second connecting sleeve 123 can be separated to each other along the axial direction of the second mounting hole, so that the gap 124 between the first conical surface and the second conical surface is widened to facilitate the placement of the armored metal layer into the gap 124. Afterwards, the first connecting sleeve 122 and the second connecting sleeve 123 can be moved closer to each other along the axial direction of the second mounting hole, so that the gap 124 between the first conical surface and the second conical surface is narrowed, thereby clamping the armored metal layer in the gap 124. Clamping the armored metal layer in the above manner is not only convenient to operate but also reliable in clamping firmness, and the armored metal layer is not easy for slipping off.

In the above embodiment, the diameters of the first conical surface and the second conical surface can be reduced in the direction away from the fixing base 121. Such a design can reduce the bending degree of the armored metal layer at the entrance of the gap 124 and reduce stress concentration.

In the above embodiments, the reinforcement assembly 120 may further include a threaded connector 125, which is connected between the second connecting sleeve 123 and the fixing base 121, and is used to adjust the relative positions of the first connecting sleeve 122 and the second connecting sleeve 123 along the axial direction of the second mounting hole. It can be understood that when the armored metal layer needs to be placed in the gap 124 between the first conical surface and the second conical surface, the threaded connector 125 can be screwed in a specific direction to separate the first connecting sleeve 122 and the second connecting sleeve 123 along the axial direction of the second mounting hole. After that, the threaded connector 125 can be screwed in the opposite direction, so that the first connecting sleeve 122 and the second connecting sleeve 123 are moved closer to each other along the axial direction of the second mounting hole, thereby clamping the armored metal layer in the gap 124. Specifically, the threaded connector 125 may include a bolt and a nut.

In the above embodiment, a clamping groove may be provided at one end of the fixing base 121 facing away from the splicing box body 110, and one end of the first connecting sleeve 122 is engaged in the clamping groove. As shown in FIGS. 1 and 2, it can be understood that when the second connecting sleeve 123 is connected to the fixing base 121, it can exert an extrusion force on the first conical surface of the first connecting sleeve 122 in a direction toward the fixing base 121, so that the end of the first connecting sleeve 122 is tightly abutted into the clamping groove of the fixing base 121, avoiding the first connecting sleeve 122 from shaking. The first connecting sleeve 122 and the fixing base 121 are connected to each other by the clamping groove, which can effectively improve the disassembly and assembly efficiency of the reinforcement assembly 120.

In the above embodiment, the sealing assembly 130 may further include a first sealing member 131, which is configured to be arranged between the second connecting sleeve 123 and the submarine cable 200. The first sealing member 131 is arranged at an end of the second connecting sleeve 123 away from the fixing base 121. The gap 124 between the second connecting sleeve 123 and the submarine cable 200 can be sealed via the first sealing member 131 to prevent seawater ingress.

In the above embodiment, the outer wall of the first sealing member 131 may include a third conical surface, and the inner wall of the second connecting sleeve 123 includes a fourth conical surface. The diameters of the third conical surface and the fourth conical surface decrease in the direction approaching the fixing base 121; and the third conical surface and the fourth conical surface abut against each other to seal the gap 124 between the second connecting sleeve 123 and the submarine cable 200. The first sealing member 131 adopts such a conical surface for sealing, which can, on the one hand, improve the sealing effect, and on the other hand, make the connection of the first sealing member 131 more stable and avoid loosening due to shaking.

In the above embodiments, the first sealing member 131 can be configured to extend from a side of the second connecting sleeve 123 away from the fixing base 121, and the outer wall of the end of the second connecting sleeve 123 away from the fixing base 121 has an external thread. The reinforcement assembly 120 further includes a fastening nut 126, which has a central hole for the submarine cable 200 to pass through. The fastening nut 126 is threadedly connected to the external thread of the second connecting sleeve 123, and abuts against the end of the first sealing member 131 extending out of the second connecting sleeve 123. By tightening the fastening nut 126 against the first sealing member 131, the reliability and sealing effect of the first sealing member 131 can be further improved.

In the above embodiments, the sealing assembly 130 may further include a second sealing member 132, which is configured to be arranged between the inner wall of the fixing base 121 and the submarine cable 200. On the one hand, the second sealing member 132 can seal the gap 124 between the fixing base 121 and the submarine cable 200. Double sealing is achieved jointly with the first sealing member 131 and the second sealing member 132, which can further enhance the sealing performance of the splicing box 100.

The first sealing member 131 and the second sealing member 132 may specifically be a sealing ring structure, and the material thereof may be an elastic waterproof material, such as rubber.

In the above embodiments, the reinforcement assembly 120 may further include a clamping sleeve 127, which is configured to be sleeved outside the submarine cable 200. The clamping sleeve 127 is arranged at the end of the fastening nut 126 facing away from the second connecting sleeve 123. The clamping sleeve 127 includes two arc-shaped clips, which are connected by bolts, causing the two clips to clamp the submarine cable 200 by adjusting the bolts. By providing the clamping sleeve 127, the sheath of the submarine cable 200 can be tightened to prevent the sheath from slipping off.

The submarine cable splicing box 100 provided by the embodiment of the present utility model includes a splicing box body 110, a reinforcement assembly 120, and a sealing assembly 130. The reinforcement assembly 120 is arranged on opposite sides of the splicing box body 110. The reinforcement assembly 120 includes a fixing base 121, a first connecting sleeve 122, and a second connecting sleeve 123. The fixing base 121 is fixedly connected to one side of the splicing box body 110, and the first connecting sleeve 122 is connected to the fixing base 121. The fixing base 121 has a first mounting hole, and the first connecting sleeve 122 has a second mounting hole. The first mounting hole is communicated with the inside of the splicing box body 110. The first mounting hole and the second mounting hole are communicated to each other; and the first mounting hole and the second mounting hole form a channel for the cable core of the submarine cable 200 to penetrate into the splicing box body 110. The second connecting sleeve 123 is sleeved outside the first connecting sleeve 122, and one end of the second connecting sleeve 123 is connected to the fixing base 121, and a gap 124 with adjustable width is formed between the first connecting sleeve 122 and the second connecting sleeve 123, clamping an armored layer of the submarine cable 200 with the gap 124. The sealing assembly 130 is arranged between the reinforcement assembly 120 and the submarine cable 200, and is used to seal the gap 124 between the reinforcement assembly 120 and the submarine cable 200.

The submarine cable splicing box 100 provided by the present utility model, by setting structures for clamping the armored metal layer of the submarine cable 200 on both sides of the splicing box body 110, when splicing the submarine cable 200, enables the cable cores of the submarine cable 200 on both sides of the splicing box 100 to be respectively penetrated into the interior of the splicing box 100 along the second mounting hole and the first mounting hole for splicing. The armored metal layer of the submarine cable 200 may be clamped in the gap 124 formed by the first connecting sleeve 122 and the second connecting sleeve 123; and the armored metal layer can be clamped by adjusting the width of the gap 124, so that the electrical connection of the submarine cable 200 on both sides of the splicing box 100 can be achieved, and the induced current generated in the splicing box 100 can be grounded, which avoids the induced current from accumulating in the splicing box 100 and damaging an optical unit, thereby effectively protecting the optical unit. In addition, by reinforcing the connection of the armored metal layer of the submarine cable 200, the overall connection strength of the splice place of the submarine cable 200 can also be improved, preventing the splice place from slipping off.

Finally, it should be noted that the above embodiments are only intended to illustrate the technical solutions of the present utility model, rather than to limit them. Although the present utility model has been described in detail with reference to the above embodiments, persons skilled in the art should understand that they can still modify the technical solutions described in the above embodiments, or make equivalent replacements for some or all of the technical features therein. However, these modifications or replacements do not deviate the essence of the corresponding technical solutions from the scope of the technical solutions of the embodiments of the present utility model.

## Claims

1. A submarine cable splicing box, comprising a splicing box body, a reinforcement assembly and a sealing assembly, wherein the reinforcement assembly is arranged on two opposite sides of the splicing box body, and the reinforcement assembly comprises a fixing base, a first connecting sleeve and a second connecting sleeve;
the fixing base is fixedly connected to one side of the splicing box body, the first connecting sleeve is connected to the fixing base, the fixing base has a first mounting hole, the first connecting sleeve has a second mounting hole, the first mounting hole is communicated with an inside of the splicing box body, the first mounting hole and the second mounting hole are communicated with each other, and the first mounting hole and the second mounting hole form a channel for a cable core of a submarine cable to penetrate into the splicing box body;
the second connecting sleeve is sleeved outside the first connecting sleeve and one end of the second connecting sleeve is connected to the fixing base, and a gap with adjustable width is formed between the first connecting sleeve and the second connecting sleeve so that an armored layer of the submarine cable is clamped through the gap;
the sealing assembly is arranged between the reinforcement assembly and the submarine cable, and is configured to seal the gap between the reinforcement assembly and the submarine cable.

2. The submarine cable splicing box according to claim 1, wherein an outer wall of the first connecting sleeve comprises a first conical surface, an inner wall of the second connecting sleeve comprises a second conical surface, the gap is formed between the first conical surface and the second conical surface, and the width of the gap changes with a change of relative positions of the first connecting sleeve and the second connecting sleeve along an axial direction of the second mounting hole.

3. The submarine cable splicing box according to claim 2, wherein diameters of the first conical surface and the second conical surface decrease in a direction away from the fixing base.

4. The submarine cable splicing box according to claim 3, wherein the reinforcement assembly further comprises a threaded connector connected between the second connecting sleeve and the fixing base, and the threaded connector is configured to adjust the relative positions of the first connecting sleeve and the second connecting sleeve along the axial direction of the second mounting hole.

5. The submarine cable splicing box according to claim 4, wherein an end of the fixing base facing away from the splicing box body has a clamping groove, and one end of the first connecting sleeve is clamped into the clamping groove.

6. The submarine cable splicing box according to claim 5, wherein the sealing assembly comprises a first sealing member configured to be arranged between the second connecting sleeve and the submarine cable, and the first sealing member is arranged at an end of the second connecting sleeve away from the fixing base.

7. The submarine cable splicing box according to claim 6, wherein an outer wall of the first sealing member comprises a third conical surface, an inner wall of the second connecting sleeve comprises a fourth conical surface, diameters of the third conical surface and the fourth conical surface decrease in a direction approaching the fixing base, and the third conical surface and the fourth conical surface abut against each other to seal the gap between the second connecting sleeve and the submarine cable.

8. The submarine cable splicing box according to claim 7, wherein the first sealing member is configured to extend from a side of the second connecting sleeve away from the fixing base; an outer wall of an end of the second connecting sleeve away from the fixing base has an external thread; the reinforcement assembly further comprises a fastening nut provided with a central hole for the submarine cable to pass through; the fastening nut is threadedly connected to the external thread of the second connecting sleeve; and the fastening nut abuts against an end of the first sealing member extending out of the second connecting sleeve.

9. The submarine cable splicing box according to claim 8, wherein the sealing assembly further comprises a second sealing member configured to be arranged between an inner wall of the fixing base and the submarine cable.

10. The submarine cable splicing box according to claim 8 or 9, wherein the reinforcement assembly further comprises a clamping sleeve configured to be sleeved outside the submarine cable; the clamping sleeve is arranged at an end of the fastening nut facing away from the second connecting sleeve; the clamping sleeve comprises two arc-shaped clips; and the two clips are connected by bolts so as to make the two clips clamp the submarine cable by adjusting the bolts.
